# EUROPÄISCHE PATENTSCHRIFT

(11) **EP 3 172 426 B1**
(45) Veröffentlichungstag und Bekanntmachung des Hinweises auf die Patenterteilung: **11.04.2018**
(21) Anmeldenummer: 15742242.9
(22) Anmeldetag: 24.07.2015
(51) Int. Cl.: F02M 37/00, G01F 9/00

(54) **KRAFTSTOFFVERBRAUCHSMESSSYSTEM SOWIE VERFAHREN ZUR MESSUNG EINES KRAFTSTOFFVERBRAUCHS EINER VERBRENNUNGSKRAFTMASCHINE**
FUEL CONSUMPTION MEASURING SYSTEM AND METHOD FOR MEASURING THE FUEL CONSUMPTION OF AN IC ENGINE
DISPOSITIF DE MESURE DE LA CONSOMMATION DE CARBURANT ET PROCÉDÉ DE MESURE DE LA CONSOMMATION DE CARBURANT D'UN MOTEUR À COMBUSTION INTERNE

(30) Priorität: 24.07.2014 AT 5902014
(43) Veröffentlichungstag der Anmeldung: 31.05.2017
(73) Patentinhaber: AVL List GmbH, 8020 Graz (AT)
(72) Erfinder: DÜRRWÄCHTER, Dr. Martin, 52066 Aachen (DE); TAUCH, Michael, A-8130 Frohnleiten (AT); BUCHNER, Michael, A-8010 Graz (AT)
(74) Vertreter: Patentanwälte ter Smitten Eberlein-Van Hoof Rütten Partnerschaftsgesellschaft mbB
(86) Internationale Anmeldenummer: PCT/EP2015/067040
(87) Internationale Veröffentlichungsnummer: WO 2016/012609

(56) Entgegenhaltungen:
- EP-A2- 0 059 303
- DE-C1- 3 707 271
- DE-U1-202006 015 480
- FR-A1- 2 015 863
- US-A- 5 284 120

## Beschreibung

Die Erfindung betrifft ein Kraftstoffverbrauchsmesssystem mit einer Kraftstoffförderleitung, über die eine erste Kraftstoffpumpe, über welche Kraftstoff aus einem Tank förderbar ist, mit einem Verbraucher fluidisch verbindbar ist, einer Kraftstoffverbrauchsmessvorrichtung, die in der Kraftstoffförderleitung angeordnet ist, einer ersten Kraftstoffrückführleitung, welche am Verbraucher abzweigt und zwischen der Kraftstoffverbrauchsmessvorrichtung und dem Verbraucher in die Kraftstoffförderleitung mündet, einer zweiten Kraftstoffrückführleitung, welche zwischen der ersten Kraftstoffpumpe und der Kraftstoffverbrauchsmessvorrichtung von der Kraftstoffförderleitung abzweigt und am Tank mündet und einem Wärmetauscher, über den der Kraftstoff aus der zweiten Kraftstoffrückführleitung Wärme aus dem Kraftstoff der ersten Kraftstoffrückführleitung entzieht sowie ein Verfahren zur Messung eines Kraftstoffverbrauchs einer Verbrennungskraftmaschine mit einem derartigen Kraftstoffverbrauchsmesssystem, bei dem über eine erste Kraftstoffpumpe Kraftstoff aus einem Tank zu einen Verbraucher gefördert wird, wobei eine Kraftstoffverbrauchsmessvorrichtung den Volumenstrom des geförderten Kraftstoffs misst.

Derartige Systeme bestehen üblicher Weise aus einem Modul, welches die eigentliche Messung des Kraftstoffstroms durchführt sowie bei Messsystemen, die eine Kraftstoffrückführung ausweisen, zusätzlich aus einem Konditioniermodul, über welches eingestellt wird, dass der vom Motor zurückgeführte Kraftstoff stromabwärts der Vorrichtung zur Durchflussmessung in die Förderleitung zurückgeführt wird. Die Kraftstoffverbrauchsmessvorrichtung besteht insbesondere aus einem Durchflussmesser, wie er in der DE-AS 1 798 080 beschrieben wird. Es handelt sich um ein elektronisch gesteuertes Durchflussmessgerät mit einem Einlass und einem Auslass, zwischen denen ein rotatorischer Verdränger in Form einer Zahnradpumpe sowie in einer zum Verdränger parallelen Leitung ein Kolben in einer Messkammer angeordnet ist. Zur Bestimmung der Durchflussmenge wird die Auslenkung des Kolbens in der Messkammer mittels eines optischen Sensors gemessen. Die Drehzahl der Zahnradpumpe wird aufgrund dieses Signals stetig nachgeregelt, und zwar derart, dass der Kolben möglichst immer in seine Ausgangsposition zurückgeführt wird. Aus der über einen Kodierer gemessenen Anzahl der Umdrehungen oder Teilumdrehungen der Zahnradpumpe sowie dem bekannten Fördervolumen der Zahnradpumpe bei einer Umdrehung wird so der Durchfluss innerhalb eines vorgegebenen Zeitintervalls berechnet. Vom Motor kommende Rückströmungen können mit derartigen Systemen nicht gemessen werden.

Diese Systeme zur Kraftstoffverbrauchsmessung mit Konditioniereinrichtung werden beispielsweise vor der Kraftstoffhochdruckpumpe eines Common-Rail Systems mit mehreren Einspritzventilen angeordnet. Es handelt sich dabei um geschlossene Kreisläufe. Alternativ ist es prinzipiell denkbar, eine Rückführleitung zum Tank vorzusehen und in dieser einen zweiten Durchflussmesser anzuordnen, so dass der Kraftstoffverbrauch aus der Differenz der beiden Durchflussmesser berechnet werden kann. Es hat sich allerdings gezeigt, dass aufgrund der sehr hohen Rückführmengen, die gegebenenfalls etwa das zehnfache und in Extremfällen das bis zu Hundertfache des Kraftstoffverbrauchs betragen, derartige Systeme keine ausreichend genauen Ergebnisse liefern.

Aus diesem Grund sind Systeme zur Kraftstoffverbrauchsmessung bekannt geworden, wie sie beispielsweise in der DE 197 81 795 T1 offenbart sind. Das hierin beschriebene System weist lediglich einen Durchflussmesser auf, der in der Förderleitung, die vom Tank zum Verbraucher führt, angeordnet ist. Vor dem Durchflussmesser zweigt eine Leitung ab, die zurück zum Tank führt und in der ein Druckregelentlastungsventil angeordnet ist, über welches der Druck in der Zuführleitung eingestellt werden kann. Eine erste Rückführleitung zweigt unmittelbar vor dem Verbraucher ab und mündet hinter dem Durchflussmesser zurück in die Förderleitung. Beide Rückführleitungen werden in einem Wärmetauscher zusammengeführt, so dass der wärmere Kraftstoff aus der ersten Rückführleitung durch den kälteren Kraftstoff aus der zweiten Rückführleitung gekühlt wird, so dass die Temperatur des Kraftstoffs, der aus der ersten Rückführleitung zurückgeführt wird, etwa der Temperatur des Kraftstoffs in der Förderleitung entspricht. In der Förderleitung befindet sich vor der Mündung der ersten Rückführleitung und hinter dem Durchflussmesser zusätzlich ein Druckminderer. Hinter der Mündung der ersten Rückführleitung ist eine weitere Förderpumpe angeordnet. Da der Kraftstoffdruck sowie die Temperatur im zweiten Rückführkreis und im ersten Rückführkreis im Wesentlichen gleich gehalten werden können, misst der Durchflussmesser den Kraftstoffverbrauch mit guter Exaktheit.

Vergleichbare Lösungen zeigen auch die EP 0122105 A2, die US 5 284 120 A1 und die WO 2005/005935 A1.

Probleme treten jedoch in Betriebszuständen auf, in denen der zurückgeführte Kraftstoffstrom größer ist als der geförderte Kraftstoffstrom. Ein derartiger Zustand kann beispielsweise beim Start eines Dieselmotors oder beim Übergang von der Volllast zum Leerlauf auftreten. Der in der Förderleitung angeordnete Druckminderer verhindert einen Rückfluss in Richtung des Tanks, wodurch eine unerwünschte Druckerhöhung in der Rückführleitung entsteht. Diese beeinflusst die Leistung des Verbrennungsmotors und kann sogar zu Schäden an Aggregaten führen.

Des Weiteren ist es in modernen Verbrennungsmotoren üblich, eine Pumpenregelung einzusetzen, bei der die Fördermenge an den zu erwartenden Kraftstoffverbrauch angepasst wird, um Energie einzusparen.

Die Regelung der Pumpe führt jedoch zu Druckänderungen in der Förderleitung, wobei gleichzeitig die Druckregelventile versuchen, während der Messung einen konstanten Druck in der Förderleitung und in der Rückführleitung herzustellen. Dies führt zu einer Beeinflussung des Verbrennungsmotors, welche dazu führen kann, dass eine Überlagerung mit der Druckregelung des Verbrennungsmotors die Folge ist, was zu Fehlern im Motormanagement führen kann.

Es stellt sich somit die Aufgabe, ein Kraftstoffverbrauchsmesssystem sowie ein Verfahren zur Messung eines Kraftstoffverbrauchs einer Verbrennungskraftmaschine zur Verfügung zu stellen, mit denen diese Probleme vermieden werden können. Entsprechend soll es möglich sein, eine exakte Verbrauchsmessung durchzuführen, ohne den Druck im System konstant halten zu müssen. Auch sollen Rückflüsse durch den Durchflussmesser zugelassen werden.

Diese Aufgabe wird durch ein Kraftstoffverbrauchsmesssystem mit den Merkmalen des Anspruchs 1 sowie ein Verfahren zur Messung eines Kraftstoffverbrauchs einer Verbrennungskraftmaschine mit den Merkmalen des Anspruchs 12 gelöst.

Bezüglich des Kraftstoffverbrauchsmesssystems sind in der ersten Kraftstoffrückführleitung und in der zweiten Kraftstoffrückführleitung Mittel angeordnet, über die ein gleicher Volumenstrom an einer Mündung der ersten Kraftstoffrückführleitung in die Kraftstoffförderleitung und an einer Abzweigung aus der Kraftstoffförderleitung in die zweite Kraftstoffrückführleitung eingestellt wird. Bezüglich des Verfahrens zur Messung des Kraftstoffverbrauchs wird während der Messung des Kraftstoffverbrauchs der Volumenstrom in einer ersten Kraftstoffrückführleitung, über die Kraftstoff vom Verbraucher zurück zu einer Förderleitung zwischen dem Verbraucher und der Kraftstoffverbrauchsmessvorrichtung strömt und in einer zweiten Kraftstoffrückführleitung, über die Kraftstoff von der Förderleitung zurück zum Tank gefördert wird, auf einen gleichen Messwert geregelt. So wird erreicht, dass das System keinen Einfluss mehr auf das Zusammenspiel zwischen Kraftstoffzuführung und Motor, insbesondere die Leistung und Regelung des Verbrennungsmotors hat. Dies bedeutet, dass die Messungen bei den gleichen Bedingungen am Verbrennungsmotor vorgenommen werden, als wenn kein Messsystem verwendet würde. Entsprechend werden die Druckänderungen durch die Regelung der Pumpe nicht überlagert von den Regelungen des Messsystems. Rückströmungen durch den Durchflussmesser sind ebenfalls möglich und können erfasst werden. Da keine nachfolgenden Regeleinheiten hinter dem Durchflussmesser notwendig sind, kann dieser nahe am Verbraucher angeordnet werden, so dass das externe hydraulische Volumen sinkt, was ebenfalls die Messergebnisse verbessert.

Vorzugsweise ist als Mittel zur Erzeugung gleicher Volumenströme aus der Kraftstoffförderleitung in die zweite Kraftstoffrückführleitung und aus der ersten Kraftstoffrückführleitung in die Kraftstoffförderleitung jeweils ein Durchflussmesser in der zweiten Kraftstoffrückführleitung und in der ersten Kraftstoffrückführleitung angeordnet, wobei beide Durchflussmesser mit einer Volumenstromregeleinheit elektrisch verbunden sind. Mittels dieser beiden Durchflussmesser kann überprüft werden, ob die Volumenströme in beiden Rückführleitungen auf den gleichen Wert eingestellt wurden, wodurch sichergestellt wird, dass die Kraftstoffmessung den tatsächlichen momentanen Kraftstoffverbrauch nicht beeinflusst.

Zusätzlich ist als Mittel zur Erzeugung gleicher Volumenströme in den Kraftstoffrückführleitungen in der zweiten Kraftstoffrückführleitung ein Regelventil angeordnet, welches über die Volumenstromregeleinheit ansteuerbar ist, welche mit den Durchflussmessern verbunden ist. Das Verfahren sieht vor, dass der Volumenstrom des Kraftstoffs in der ersten Kraftstoffrückführleitung über einen ersten Durchflussmesser gemessen wird und der Volumenstrom des Kraftstoffs in der zweiten Kraftstoffrückführleitung über einen zweiten Durchflussmesser gemessen wird, und über eine Volumenstromregeleinheit ein Regelventil in der zweiten Kraftstoffrückführleitung derart geregelt wird, dass der Volumenstrom in der zweiten Kraftstoffrückführleitung auf einen gleichen Wert wie der Volumenstrom in der ersten Kraftstoffrückführleitung geregelt wird. Dies bedeutet, dass das Regelventil in Abhängigkeit der Messwerte der Durchflussmesser den Volumenstrom in der zweiten Rückführleitung auf den gleichen Volumenstrom wie in der ersten Rückführleitung regelt, so dass mit einfachen Mitteln ein Gleichgewicht zwischen den zur Förderleitung geführten Volumenströmen und den von der Förderleitung entnommenen Volumenströmen vorliegt. Entsprechend wird an der Vorrichtung zur Durchflussmessung der tatsächliche Kraftstoffverbrauch gemessen. Ein derartiges Konditioniermodul ist einfach herstellbar.

Des Weiteren ist vorteilhafterweise in der ersten Kraftstoffrückführleitung eine zweite Kraftstoffpumpe angeordnet. Über diese kann der Druck in der ersten Rückführleitung auf Werte eingestellt werden, die denen ohne Messsystem entsprechen.

Dabei ist vorzugsweise die zweite Kraftstoffpumpe mit einer Druckregeleinheit elektrisch verbunden, welche mit einem Druckaufnehmer elektrisch verbunden ist, der in der ersten Kraftstoffrückführleitung stromaufwärts des Wärmetauschers angeordnet ist. Bezüglich des Verfahrens wird somit der Druck des Kraftstoffs in der ersten Kraftstoffrückführleitung über einen Druckaufnehmer gemessen und über eine Druckregeleinheit eine zweite Kraftstoffpumpe stromabwärts des Wärmetauschers und stromaufwärts der Mündung der ersten Kraftstoffrückführleitung derart geregelt, dass in der ersten Kraftstoffrückführleitung ein konstanter Druck anliegt. Der Druck, der während der Messung in der ersten Rückführleitung herrscht, wird somit auf einen durchschnittlichen Druck in der ersten Rückführleitung außerhalb der Messzeiten geregelt, so dass in der Rückführleitung während der Messungen immer ein konstanter Druck anliegt, wodurch Druckschwankungen in der Förderleitung nicht überlagert werden.

In einer alternativen Ausgestaltung der Erfindung wird die zweite Kraftstoffpumpe mit einer konstanten Drehzahl betrieben und ist im Kreis mit einem Regelventil verschaltet ist, wobei das Regelventil und der erste Durchflussmesser mit der Druckregeleinheit verbunden sind. Insbesondere bei kleinen Durchflüssen wird durch eine derartige Ausführung die Druckbeziehungsweise Volumenstromregelung deutlich vereinfacht. Des Weiteren sind derartige nicht kontinuierlich regelbare Pumpen deutlich kostengünstiger herstellbar.

Dabei ist vorteilhafterweise die zweite Kraftstoffpumpe stromaufwärts des Wärmetauschers angeordnet und das Regelventil in einer Kreisleitung angeordnet, die stromabwärts des Wärmetauschers von der Kraftstoffrückführleitung abzweigt und stromabwärts des Durchflussmessers und stromaufwärts der Kraftstoffpumpe wieder in die Kraftstoffrückführleitung mündet. Der Druck des Kraftstoffs wird dann vorzugsweise in der ersten Kraftstoffrückführleitung über ein Regelventil, welches in der Kreisleitung mit einer drehzahlkonstanten zweiten Kraftstoffpumpe angeordnet ist, und mit einer Druckregeleinheit derart geregelt, dass im Bereich der Mündung der ersten Kraftstoffrückführleitung ein konstanter Druck anliegt. Der Druck im Bereich der Mündung der ersten Rückführleitung während der Messung wird auch bei dieser Ausführung auf einen durchschnittlichen Druck in der ersten Rückführleitung außerhalb der Messzeiten geregelt, so dass in der Rückführleitung während der Messungen immer ein konstanter Druck anliegt, wodurch Druckschwankungen in der Förderleitung nicht überlagert werden.

Besonders vorteilhaft ist es, wenn der erste Durchflussmesser und die zweite Kraftstoffpumpe stromabwärts des Wärmetauschers in der ersten Kraftstoffrückführleitung angeordnet sind und der zweite Durchflussmesser und das Regelventil stromaufwärts des Wärmetauschers in der zweiten Kraftstoffrückführleitung angeordnet sind. Somit befinden sich die Mittel zur Regelung der Volumenströme an der kalten Seite des Wärmetauschers, an dem etwa gleiche Temperaturen vorliegen, wodurch der Temperatureinfluss auf die Regelung deutlich verringert wird.

In einer alternativen Ausgestaltung ist der zweite Durchflussmesser stromabwärts des Wärmetauschers in der zweiten Kraftstoffrückführleitung angeordnet. In dieser Ausführung befinden sich die Mittel zur Regelung der Volumenströme beide auf der warmen Seite des Wärmetauschers, so dass auch hier nur ein geringer Temperatureinfluss vorliegt.

In einer bevorzugten Ausbildung der Erfindung ist in der Kraftstoffverbrauchsmessvorrichtung ein rotatorischer Verdränger und in einer Umgehungsleitung zum rotatorischen Verdränger eine Messkammer ausgebildet, in der ein Kolben angeordnet ist, wobei der rotatorische Verdränger in Abhängigkeit der Auslenkung des Kolbens antreibbar ist. Derartige Durchflussmesser arbeiten sehr präzise und geben auch kurzzeitige Verbrauchsänderungen korrekt wieder.

Um möglichst einfach zwischen der Verbrauchsmessung und dem Normalbetrieb der Verbrennungskraftmaschine umschalten zu können und das System inline an einem fahrenden Fahrzeug nutzen zu können, ist in der ersten Kraftstoffrückführleitung ein Bypassventil angeordnet, über welches der Kraftstoff aus der ersten Kraftstoffrückführleitung wahlweise zum Wärmetauscher oder über einen Bypasskanal zurück zum Tank führbar ist. Für das Verfahren bedeutet dies, dass über ein Bypassventil außerhalb der Messzeiten ein Kraftstoffstrom aus der ersten Kraftstoffrückführleitung über eine Bypassleitung unter Umgehung des Wärmetauschers in den Tank zurückgeführt wird und das Regelventil die zweite Kraftstoffrückführleitung verschließt.

In einer bevorzugten Ausgestaltung des Verfahrens zur Kraftstoffverbrauchsmessung wird die Temperatur des Kraftstoffs in der ersten Kraftstoffrückführleitung stromaufwärts der Mündung in die Kraftstoffförderleitung annähernd auf die Temperatur des Kraftstoffs im Tank heruntergekühlt, indem der erwärmte Kraftstoff in der ersten Kraftstoffrückführleitung und der nicht erwärmte Kraftstoff in der zweiten Kraftstoffrückführleitung als Wärmeaustauschmedien eines Wärmetauschers dienen. So werden die Temperatur des die Förderleitung verlassenden Kraftstoffs und die Temperatur des zur Förderleitung zurückgeführten Kraftstoffs auf etwa gleiche Werte eingestellt, so dass keine Massenstromdifferenzen aufgrund verschiedener Temperaturen auftreten. Zusätzlich wird eine Aufheizung des Kraftstoffs in der Förderleitung oder im Tank vermieden.

Es wird somit ein Kraftstoffverbrauchsmesssystem sowie ein Verfahren zur Kraftstoffverbrauchsmessung zur Verfügung gestellt, mit dem zeitlich aufgelöste Durchflussvorgänge mit hoher Genauigkeit und kontinuierlich ermittelt werden können. Dabei werden auch Fehler in der Durchflussdatenberechnung vermieden, wenn Oszillationen des Durchflusses auftreten, ungleichmäßige Fördermengen der Pumpe vorliegen oder starke Pulsationen, die gegebenenfalls zu einem Rückströmen führen, vorhanden sind. Bei alledem werden keine zusätzlichen Sensoren zur Ermittlung oder Übertragung von externen Daten benötigt. Das System arbeitet somit autark.

Das erfindungsgemäße Kraftstoffverbrauchsmesssystem ist in den Figuren dargestellt und wird nachfolgend ebenso wie das zugehörige Verfahren zur Messung eines Kraftstoffverbrauchs anhand der Figuren beschrieben.
Figur 1 zeigt ein Fließschema eines erfindungsgemäßen Kraftstoffverbrauchsmesssystems.
Figur 2 zeigt ein Schema einer Kraftstoffverbrauchsmessvorrichtung, wie sie im Kraftstoffverbrauchsmesssystem vorteilhafterweise verwendet wird.
Figur 3 zeigt ein Fließschema eines im Vergleich zu Figur 1 leicht veränderten erfindungsgemäßen Kraftstoffverbrauchsmesssystems.

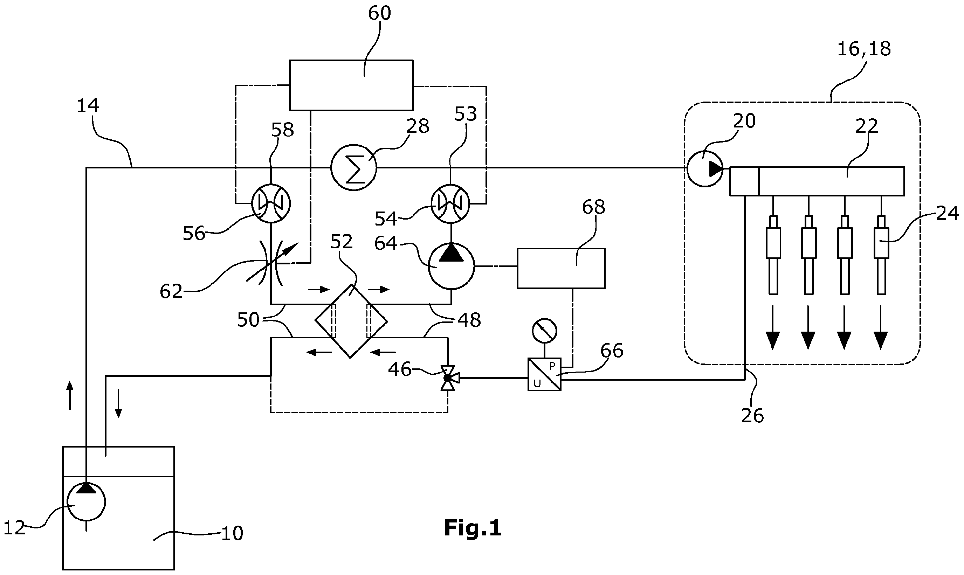

Das in Figur 1 dargestellte Kraftstoffverbrauchsmesssystem besteht aus einem Tank 10, in dem Kraftstoff gespeichert ist. Aus diesem Tank 10 wird mittels einer ersten Kraftstoffpumpe 12 Kraftstoff in eine Kraftstoffförderleitung 14 gepumpt. Die Kraftstoffförderleitung 14 führt zu einem Verbraucher 16, der in diesem Ausführungsbeispiel als Verbrennungsmotor 18 mit Common-Rail-Einspritzsystem ausgeführt ist. Entsprechend führt die Kraftstoffförderleitung 14 zu einer Hochdruckpumpe 20, über die der Kraftstoff in ein Common-Rail Verteilerrohr 22 gefördert und verdichtet wird. Das Verteilerrohr 22 ist fluidisch mit Einspritzventilen 24 verbunden, über die der Kraftstoff in die Verbrennungsräume des Verbrennungsmotors 18 eingespritzt wird.

Üblicherweise werden in diesen Systemen größere Kraftstoffmengen gefördert als tatsächlich über die Einspritzventile 24 eingespritzt werden, so dass vom Verteilerrohr 22 eine erste Kraftstoffrückführleitung 26 abzweigt, welche zum Tank 10 zurückführt. Dabei können die zurückgeführten Kraftstoffmengen ein Vielfaches der eingespritzten Kraftstoffmengen betragen.

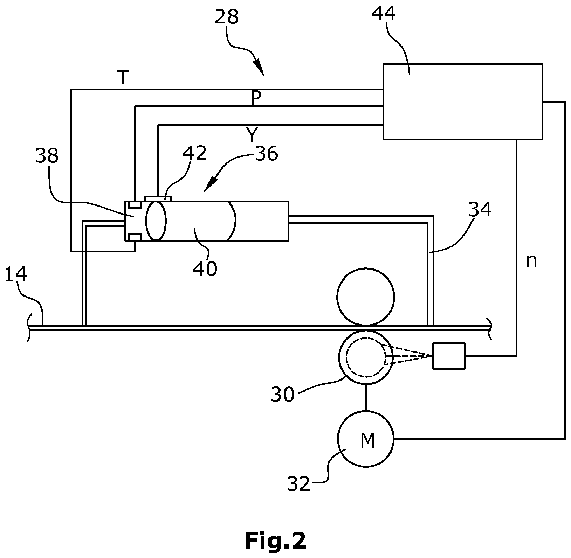

Um den Verbrauch des Kraftstoffs zu messen, ist in der Kraftstoffförderleitung 14 eine Kraftstoffverbrauchsmessvorrichtung 28 angeordnet. Diese kann insbesondere, wie in Figur 2 dargestellt, ausgestaltet sein.

In der Kraftstoffförderleitung 14 ist zur Messung ein rotatorischer Verdränger 30, beispielsweise in Form einer Doppelzahnradpumpe angeordnet. Der rotatorische Verdränger 30 wird über eine Kupplung oder ein Getriebe von einem Antriebsmotor 32 angetrieben.

Von der Kraftstoffförderleitung 14 zweigt stromaufwärts des rotatorischen Verdrängers 30 eine Umgehungsleitung 34 ab, die stromabwärts des rotatorischen Verdrängers 30 wieder in die Kraftstoffförderleitung 14 mündet. In dieser Umgehungsleitung 34 befindet sich ein in einer Messkammer 38 frei verschiebbar angeordneter Kolben 40, der das gleiche spezifische Gewicht wie das Messfluid, also der Kraftstoff, aufweist, so dass er sich trägheitsfrei mit dem Kraftstoff entsprechend des in der Umgehungsleitung 34 vorhandenen Volumenstorms bewegt. Die Messkammer 38 ist zylindrisch geformt und weist einen Innendurchmesser auf, der im Wesentlichen dem Außendurchmesser des Kolbens 40 entspricht. Tritt eine Volumenstromänderung in der Kraftstoffförderleitung 14 auf, hat dies zunächst eine Auslenkung des Kolbens 40 zur Folge. Diese Auslenkung wird mittels eines Wegsensors 42 gemessen und die Messwerte einer Steuereinheit 44 zur Verfügung gestellt, welche die Werte dieses Wegsensors 42 aufnimmt und entsprechende Steuersignale dem Antriebsmotor 32 übermittelt, der derart angesteuert wird, dass der Kolben 40 immer in seine definierte Ausgangsstellung zurückbewegt wird, der Volumenstrom also möglichst exakt immer über den rotatorischen Verdränger 30 abgeführt wird. Dies bedeutet, dass bei Auslenkung des Kolbens 40 nach rechts in Abhängigkeit der Größe dieser Auslenkung die Drehzahl des rotatorischen Verdrängers 30 erhöht wird und umgekehrt. Hierzu wird die Auslenkung des Kolbens 40 beziehungsweise das durch ihn verdrängte Volumen in der Messkammer 38 mittels einer Übertragungsfunktion in ein gewünschtes Fördervolumen des rotatorischen Verdrängers 30 beziehungsweise eine Drehzahl des Antriebsmotors 32 umgerechnet und der Antriebsmotor 32 entsprechend bestromt.

Da jeder Drehzahl des rotatorischen Verdrängers 30 ein im Zeitintervall gefördertes Volumen zugeordnet werden kann, ist es entsprechend möglich, einen Kraftstoffverbrauch aus diesen Werten zu berechnen. Über das Messgerät entsteht keine zusätzliche Druckdifferenz, wodurch kein Einfluss auf die Messung ausgeübt wird. Daher können auch keine Leckagen über den Verdränger 30 auftreten und es kommt nicht zu durchflussabhängigen Messfehlern.

Bei dem bislang beschriebenen System würde jedoch der Gesamtkraftstoffstrom einschließlich des zurückgeführten Kraftstoffs gemessen. Um dies zu vermeiden und wirklich nur die eingespritzte Kraftstoffmenge an der Kraftstoffverbrauchsmessvorrichtung 28 zu messen, werden zwei getrennte Kraftstoffrückführleitungen während der Messzeiten verwendet. Zunächst ist in der ersten Kraftstoffrückführleitung 26 ein Bypassventil 46 angeordnet, über welches der Kraftstoffstrom aus der ersten Kraftstoffrückführleitung 26 in einen zweiten Zweig 48 der ersten Kraftstoffrückführleitung 26 strömen kann, der stromabwärts der Kraftstoffverbrauchsmessvorrichtung 28 in die Kraftstoffförderleitung 14 mündet. Zusätzlich zweigt von der Kraftstoffförderleitung 14 eine zweite Kraftstoffrückführleitung 50 stromaufwärts der Kraftstoffverbrauchsmessvorrichtung 28 ab, welche zurück zum Tank 10 führt.

Die beiden Kraftstoffströme der beiden Kraftstoffrückführleitungen 26, 50 stehen über einen Wärmetauscher 52 in einem Wärme austauschenden Kontakt zueinander. Dies bedeutet, dass der über den Verbraucher zurückgeführte und erwärmte Kraftstoffstrom aus der ersten Kraftstoffrückführleitung 26 Wärme an den kühleren Kraftstoffstrom aus der zweiten Kraftstoffrückführleitung 50 abgibt, so dass die Temperatur des aus der ersten Kraftstoffrückführleitung 26 in die Kraftstoffförderleitung 14 gelangenden Kraftstoffstroms im Wesentlichen der Temperatur des aus der Kraftstoffförderleitung 14 über die zweite Kraftstoffrückführleitung 50 abgezweigten Kraftstoffstroms entspricht.

Des Weiteren sind in den beiden Kraftstoffrückführleitungen 26, 50 Mittel angeordnet, über die es möglich ist, die Volumenströme in beiden Kraftstoffrückführleitungen 26, 50 auf gleiche Messwerte einzustellen, was zur Folge hat, dass an der Kraftstoffverbrauchsmessvorrichtung 28 ausschließlich der tatsächlich verbrauchte Kraftstoff gemessen wird. Im Einzelnen bestehen diese Mittel aus zwei Durchflussmessern 54, 56, von denen ein erster Durchflussmesser 54 in der ersten Kraftstoffrückführleitung 26 zwischen dem Wärmetauscher 52 und der Mündung 53 der ersten Kraftstoffrückführleitung 26, und der andere, zweite Durchflussmesser 56 in der zweiten Kraftstoffrückführleitung 50 zwischen der Abzweigung 58 vom Kraftstoffförderkanal 14 und dem Wärmetauscher 52 angeordnet ist. Beide Durchflussmesser 54, 56, die beispielsweise als einfache Turbinenzähler ausgeführt werden können, sind elektrisch mit einer Volumenstromregeleinheit 60 verbunden. Über diese Volumenstromregeleinheit 60 wird ein Regelventil 62, welches zwischen dem zweiten Durchflussmesser 56 und dem Wärmetauscher 52 in der zweiten Kraftstoffrückführleitung 50 angeordnet ist, derart angesteuert, dass in beiden Kraftstoffrückführleitungen 26, 50 während der Messzeiten ein gleicher Volumenstrom gemessen wird. Dieses Regelventil kann beispielsweise als Druckregler oder regelbare Drossel ausgeführt werden.

Um zusätzlich sicher zu stellen, dass im Vergleich zum Normalbetrieb ohne Messung des Kraftstoffverbrauchs keine veränderten Druckbedingungen vorliegen, sondern vorhandene Druckpulsationen oder Änderungen durch Regelungen der Hochdruckpumpe 20 oder der ersten Kraftstoffpumpe 12 auch korrekt während der Messzeiten wiedergegeben werden, wird der Druck in der ersten Kraftstoffrückführleitung 26 mittels einer zweiten Kraftstoffpumpe 64 in der ersten Kraftstoffförderleitung 26 zwischen dem Wärmetauscher 52 und dem ersten Durchflussmesser 54 auf einen Wert eingestellt, der einem Durchschnittswert des Drucks in der ersten Kraftstoffrückführleitung 26 außerhalb der Messzeiten entspricht. Um die zweite Kraftstoffpumpe 64 entsprechend ansteuern zu können, ist in der ersten Kraftstoffrückführleitung 26 stromaufwärts des Bypassventils 46 ein Druckaufnehmer 66 angeordnet, der mit einer Druckregeleinheit 68 verbunden ist, über die die zweite Kraftstoffpumpe 64 geregelt wird. Da es sich um ein zur Kraftstoffförderleitung 14 offenes System handelt, wird sich an der Abzweigung 58 in die zweite Kraftstoffrückführleitung 50 und an der Mündung 53 der ersten Kraftstoffrückführleitung 26 neben dem gleichen Volumenstrom auch ein im Wesentlichen gleicher Druck einstellen. Somit verlässt stromaufwärts der Kraftstoffverbrauchsmessvorrichtung 28 ein Kraftstoffstrom die Kraftstoffförderleitung 14, der sowohl bezüglich der Temperatur aufgrund des Wärmetauschers 52, als auch des Drucks als auch des Volumenstroms aufgrund der Regelung mittels des Regelventils 62 und der beiden Durchflussmesser 54, 56 im Wesentlichen dem Kraftstoffstrom entspricht, der über die erste Kraftstoffrückführleitung 26 stromabwärts der Kraftstoffverbrauchsmessvorrichtung 28 der Kraftstoffförderleitung 14 wieder zugeführt wird, woraus folgt, dass die Messwerte der Kraftstoffverbrauchsmessvorrichtung 28 nicht durch die Zu- und Abführung beeinflusst werden.

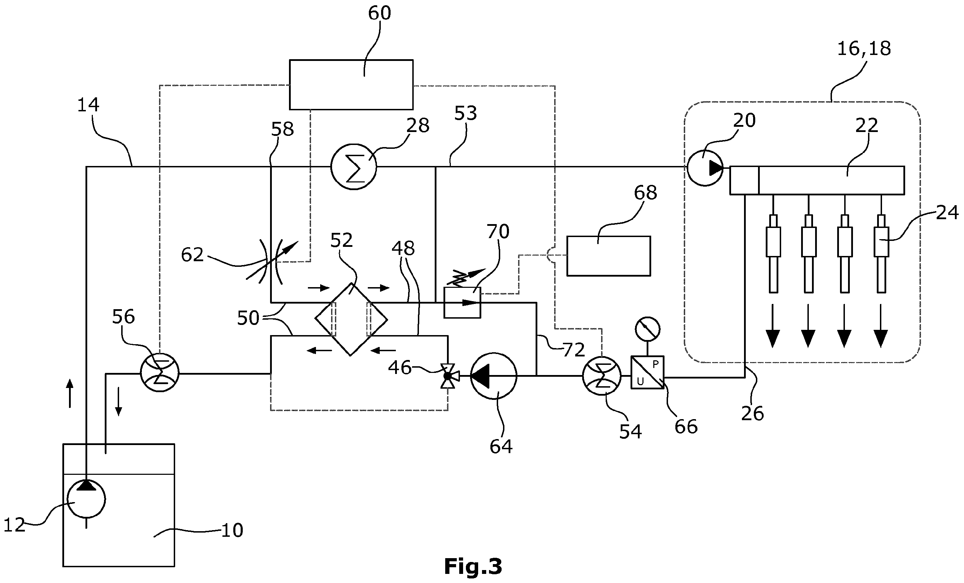

In Figur 3 ist eine alternative Möglichkeit gezeigt, die Volumenströme und Drücke entsprechend zu regeln. Im Vergleich zu der Ausführung gemäß Figur 1 wird eine nicht regelbare zweite Kraftstoffpumpe 64 verwendet. Diese ist ebenso wie der erste Durchflussmesser 54 in der ersten Kraftstoffrückführleitung 26 stromaufwärts des Wärmetauschers 52 angeordnet. Entsprechend ist auch der in der zweiten Kraftstoffrückführleitung 50 angeordnete zweite Durchflussmesser 56 auf der warmen Seite, also stromabwärts des Wärmetauschers 52 angeordnet. Um auch mit der nicht regelbaren Kraftstoffpumpe 64 den Volumenstrom, welcher an der Abzweigung 58 in die zweite Kraftstoffrückführleitung 50 abfließt, und den Volumenstrom, der an der Mündung 53 der Kraftstoffförderleitung 14 zugeführt wird, gleich zu halten, zweigt vor der Mündung 53 von der ersten Kraftstoffrückführleitung 26 eine Kreisleitung 72 ab, in der ein Regelventil 70 angeordnet ist und die zwischen dem ersten Durchflussmesser 54 und der zu diesem stromabwärtigen zweiten Kraftstoffpumpe 64 wieder in die Kraftstoffrückführleitung 26 mündet. Das Regelventil 70 ist mit einer Druckregeleinheit 68 verbunden, über die der in der Kreisleitung 72 zurückgeführte Volumenstrom und damit auch der Druck des über die Kraftstoffrückführleitung 26 zurückgeführten Kraftstoffs regelbar sind. Über die Volumenstromregeleinheit 60 wird weiterhin das Regelventil 62, welches zwischen dem zweiten Durchflussmesser 56 und dem Wärmetauscher 52 in der zweiten Kraftstoffrückführleitung 50 angeordnet ist, derart angesteuert, dass in beiden Kraftstoffrückführleitungen 26, 50 während der Messzeiten ein gleicher Volumenstrom gemessen wird. Da es sich um ein zur Kraftstoffförderleitung 14 offenes System handelt, wird sich an der Abzweigung 58 in die zweite Kraftstoffrückführleitung 50 und an der Mündung 53 der ersten Kraftstoffrückführleitung 26 neben dem gleichen Volumenstrom auch ein im Wesentlichen gleicher Druck einstellen.

Es wird auch bei dieser Ausführung sichergestellt, dass im Messbetrieb im Vergleich zum Normalbetrieb ohne Messung des Kraftstoffverbrauchs keine veränderten Druckbedingungen vorliegen, und zwar indem der Druck in der ersten Kraftstoffrückführleitung 26 über die Druckregeleinheit 68 mittels des Regelventils 70 in der Kreisleitung 72 auf einen Wert eingestellt wird, der einem Durchschnittswert des Drucks in der ersten Kraftstoffrückführleitung 26 außerhalb der Messzeiten entspricht.

In beiden alternativen Varianten wird erreicht, dass an der Kraftstoffverbrauchsmessvorrichtung 28 genau der tatsächlich verbrauchte Kraftstoffstrom gemessen wird, und zwar ohne dass in der Kraftstoffförderleitung 14 irgendwelche Einbauten vorhanden wären, die zu einem Druckverlust führen würden oder die Strömung in anderer Weise beeinflussen würden. Entsprechend werden zum Beispiel auch Rückströmungen an der Kraftstoffverbrauchsmessvorrichtung 28 wahrgenommen, wie sie beispielsweise dadurch entstehen, dass die rückgeführte Kraftstoffmenge die geförderte Kraftstoffmenge übersteigt, wie dies beim Start eines Dieselmotors oder beim Übergang von der Volllast zum Leerlauf des Motors entstehen kann. Auch Pulsationen der Hochdruckpumpe werden korrekt wiedergegeben. Ein Einfluss auf die Leistung des Verbrennungsmotors aufgrund der Messungen wird ausgeschlossen, da gleiche Bedingungen wie im Normalbetrieb geschaffen werden. Es ergeben sich somit sehr genaue, zeitlich aufgelöste Messwerte des Kraftstoffverbrauchs, die den tatsächlichen Werten des Kraftstoffverbrauchs des Verbrennungsmotors im Normalbetrieb außerhalb der Messzeiten entsprechen.

Es sollte deutlich sein, dass die Erfindung nicht auf das beschriebene Ausführungsbeispiel begrenzt ist, sondern verschiedene Modifikationen innerhalb des Schutzbereichs des Hauptanspruchs möglich sind. Insbesondere ist es denkbar, andere Mittel zur Einstellung der gleichen Kraftstoffmassenströme in den beiden Kraftstoffrückführleitung zu verwenden. Auch können andere Durchflussmesser verwendet werden.

## Patentansprüche

1. Kraftstoffverbrauchsmesssystem einer Verbrennungskraftmaschine mit einer Kraftstoffförderleitung (14), über die eine erste Kraftstoffpumpe (12), über welche Kraftstoff aus einem Tank (10) förderbar ist, mit einem Verbraucher (16) fluidisch verbindbar ist,
einer Kraftstoffverbrauchsmessvorrichtung (28), die in der Kraftstoffförderleitung (14) angeordnet ist,
einer ersten Kraftstoffrückführleitung (26), welche am Verbraucher (16) abzweigt und zwischen der Kraftstoffverbrauchsmessvorrichtung (28) und dem Verbraucher (16) in die Kraftstoffförderleitung (14) mündet,
einer zweiten Kraftstoffrückführleitung (50), welche zwischen der ersten Kraftstoffpumpe (12) und der Kraftstoffverbrauchsmessvorrichtung (28) von der Kraftstoffförderleitung (14) abzweigt und am Tank (10) mündet,
einem Wärmetauscher (52), über den der Kraftstoff aus der zweiten Kraftstoffrückführleitung (50) Wärme aus dem Kraftstoff der ersten Kraftstoffrückführleitung (26) entzieht,
**dadurch gekennzeichnet, dass**
in der ersten Kraftstoffrückführleitung (26) und in der zweiten Kraftstoffrückführleitung (50) Mittel (54, 56, 62) angeordnet sind, über die ein gleicher Volumenstrom an einer Mündung (53) der ersten Kraftstoffrückführleitung (26) in die Kraftstoffförderleitung (14) und an einer Abzweigung (58) aus der Kraftstoffförderleitung (14) in die zweite Kraftstoffrückführleitung (50) eingestellt wird.

2. Kraftstoffverbrauchsmesssystem nach Anspruch 1,
**dadurch gekennzeichnet, dass**
als Mittel zur Erzeugung gleicher Volumenströme aus der Kraftstoffförderleitung (14) in die zweite Kraftstoffrückführleitung (50) und aus der ersten Kraftstoffrückführleitung (26) in die Kraftstoffförderleitung (14) jeweils ein Durchflussmesser (54, 56) in der zweiten Kraftstoffrückführleitung (50) und in der ersten Kraftstoffrückführleitung (26) angeordnet ist, wobei beide Durchflussmesser (54, 56) mit einer Volumenstromregeleinheit (60) elektrisch verbunden sind.

3. Kraftstoffverbrauchsmesssystem nach Anspruch 2,
**dadurch gekennzeichnet, dass**
als Mittel zur Erzeugung gleicher Volumenströme in den Kraftstoffrückführleitungen (26, 50) in der zweiten Kraftstoffrückführleitung (50) ein Regelventil (62) angeordnet ist, welches über die Volumenstromregeleinheit (60) ansteuerbar ist, welche mit den Durchflussmessern (54, 56) verbunden ist.

4. Kraftstoffverbrauchsmesssystem nach einem der Ansprüche 2 oder 3,
**dadurch gekennzeichnet, dass**
in der ersten Kraftstoffrückführleitung (26) eine zweite Kraftstoffpumpe (64) angeordnet ist.

5. Kraftstoffverbrauchsmesssystem nach Anspruch 4,
**dadurch gekennzeichnet, dass**
die zweite Kraftstoffpumpe (64) mit einer Druckregeleinheit (68) elektrisch verbunden ist, welche mit einem Druckaufnehmer (66) elektrisch verbunden ist, der in der ersten Kraftstoffrückführleitung (26) stromaufwärts des Wärmetauschers (52) angeordnet ist.

6. Kraftstoffverbrauchsmesssystem nach Anspruch 4,
**dadurch gekennzeichnet, dass**
die zweite Kraftstoffpumpe (64) mit einer konstanten Drehzahl betrieben ist und im Kreis mit einem Regelventil (70) verschaltet ist, wobei das Regelventil (70) und der erste Durchflussmesser (54) mit der Druckregeleinheit (68) verbunden sind.

7. Kraftstoffverbrauchsmesssystem nach Anspruch 6,
**dadurch gekennzeichnet, dass**
die zweite Kraftstoffpumpe (64) stromaufwärts des Wärmetauschers (52) angeordnet ist und das Regelventil (70) in einer Kreisleitung (72) angeordnet ist, die stromabwärts des Wärmetauschers (52) von der Kraftstoffrückführleitung (26) abzweigt und stromabwärts des Durchflussmessers (54) und stromaufwärts der Kraftstoffpumpe (64) wieder in die Kraftstoffrückführleitung (26) mündet.

8. Kraftstoffverbrauchsmesssystem nach einem der Ansprüche 1 bis 5,
**dadurch gekennzeichnet, dass**
der erste Durchflussmesser (54) und die zweite Kraftstoffpumpe (64) stromabwärts des Wärmetauschers (52) in der ersten Kraftstoffrückführleitung (26) angeordnet sind und der zweite Durchflussmesser (56) und das Regelventil (62) stromaufwärts des Wärmetauschers (52) in der zweiten Kraftstoffrückführleitung (50) angeordnet sind.

9. Kraftstoffverbrauchsmesssystem nach einem der Ansprüche 6 oder 7,
**dadurch gekennzeichnet, dass**
der zweite Durchflussmesser (56) stromabwärts des Wärmetauschers (52) in der zweiten Kraftstoffrückführleitung (50) angeordnet ist.

10. Kraftstoffverbrauchsmesssystem nach einem der vorhergehenden Ansprüche,
**dadurch gekennzeichnet, dass**
in der Kraftstoffverbrauchsmessvorrichtung (28) ein rotatorischer Verdränger (30) und in einer Umgehungsleitung (34) zum rotatorischen Verdränger (30) eine Messkammer (38) ausgebildet ist, in der ein Kolben (40) angeordnet ist, wobei der rotatorische Verdränger (30) in Abhängigkeit der Auslenkung des Kolbens (40) antreibbar ist.

11. Kraftstoffverbrauchsmesssystem nach einem der vorhergehenden Ansprüche,
**dadurch gekennzeichnet, dass**
in der ersten Kraftstoffrückführleitung (26) ein Bypassventil (46) angeordnet ist, über welches der Kraftstoff aus der ersten Kraftstoffrückführleitung (26) wahlweise zur Kraftstoffförderleitung (14) oder zurück zum Tank (10) führbar ist.

12. Verfahren zur Messung eines Kraftstoffverbrauchs einer Verbrennungskraftmaschine mit einem Kraftstoffverbrauchsmesssystem gemäß einem der vorhergehenden Ansprüche, bei dem über eine erste Kraftstoffpumpe (12) Kraftstoff aus einem Tank (10) zu einen Verbraucher (16) gefördert wird, wobei eine Kraftstoffverbrauchsmessvorrichtung (28) den Volumenstrom des geförderten Kraftstoffs misst,
**dadurch gekennzeichnet, dass**
während der Messung des Kraftstoffverbrauchs der Volumenstrom in einer ersten Kraftstoffrückführleitung (26), über die Kraftstoff vom Verbraucher (16) zurück zu einer Kraftstoffförderleitung (14) zwischen dem Verbraucher (16) und der Kraftstoffverbrauchsmessvorrichtung (28) strömt und in einer zweiten Kraftstoffrückführleitung (50), über die Kraftstoff von der Kraftstoffförderleitung (14) zurück zum Tank (10) gefördert wird, auf gleiche Messwerte geregelt wird.

13. Verfahren zur Messung eines Kraftstoffverbrauchs einer Verbrennungskraftmaschine nach Anspruch 12,
**dadurch gekennzeichnet, dass**
die Temperatur des Kraftstoffs in der ersten Kraftstoffrückführleitung (26) stromaufwärts der Mündung in die Kraftstoffförderleitung (14) annähernd auf die Temperatur des Kraftstoffs im Tank (10) heruntergekühlt wird, indem der erwärmte Kraftstoff in der ersten Kraftstoffrückführleitung (26) und der nicht erwärmte Kraftstoff in der zweiten Kraftstoffrückführleitung (50) als Wärmeaustauschmedien eines Wärmetauschers (52) dienen.

14. Verfahren zur Messung eines Kraftstoffverbrauchs einer Verbrennungskraftmaschine nach einem der Ansprüche 12 oder 13,
**dadurch gekennzeichnet, dass**
der Druck des Kraftstoffs in der ersten Kraftstoffrückführleitung (26) über einen Druckaufnehmer (66) gemessen wird und über eine Druckregeleinheit (68) eine zweite Kraftstoffpumpe (64) stromaufwärts einer Mündung (53) der ersten Kraftstoffrückführleitung (26) derart geregelt wird, dass in der ersten Kraftstoffrückführleitung (26) ein konstanter Druck anliegt.

15. Verfahren zur Messung eines Kraftstoffverbrauchs einer Verbrennungskraftmaschine nach einem der Ansprüche 12 oder 13,
**dadurch gekennzeichnet, dass**
der Druck des Kraftstoffs in der ersten Kraftstoffrückführleitung (26) über ein Regelventil (70), welches in einer Kreisleitung (72) mit einer drehzahlkonstanten zweiten Kraftstoffpumpe (64) angeordnet ist, und mit einer Druckregeleinheit (68) derart geregelt wird, dass im Bereich der Mündung (53) der ersten Kraftstoffrückführleitung (26) ein konstanter Druck anliegt.

16. Verfahren zur Messung eines Kraftstoffverbrauchs einer Verbrennungskraftmaschine nach einem der Ansprüche 12 bis 15,
**dadurch gekennzeichnet, dass**
der Volumenstrom des Kraftstoffs in der ersten Kraftstoffrückführleitung (26) über einen ersten Durchflussmesser (54) gemessen wird und der Volumenstrom des Kraftstoffs in der zweiten Kraftstoffrückführleitung (50) über einen zweiten Durchflussmesser (56) gemessen wird, und über eine Volumenstromregeleinheit (60) ein Regelventil (62) in der zweiten Kraftstoffrückführleitung (50) derart geregelt wird, dass der Volumenstrom in der zweiten Kraftstoffrückführleitung (50) auf einen gleichen Wert wie der Volumenstrom in der ersten Kraftstoffrückführleitung (26) geregelt wird.

17. Verfahren zur Messung eines Kraftstoffverbrauchs einer Verbrennungskraftmaschine nach einem der Ansprüche 12 bis 16,
**dadurch gekennzeichnet, dass**
über ein Bypassventil (46) außerhalb der Messzeiten ein Kraftstoffstrom aus der ersten Kraftstoffrückführleitung (26) unter Umgehung des Wärmetauschers (52) in den Tank (10) zurückgeführt wird und das Regelventil (62) die zweite Kraftstoffrückführleitung (50) verschließt.

18. Verfahren zur Messung eines Kraftstoffverbrauchs einer Verbrennungskraftmaschine nach Anspruch 17,
**dadurch gekennzeichnet, dass**
während der Messzeiten der Druck in der ersten Kraftstoffrückführleitung (26) konstant auf einen Druck außerhalb der Messzeiten geregelt wird.

## Claims

1. Fuel consumption-measuring system for an internal combustion engine, having
a fuel feed line (14) via which a first fuel pump (12), via which fuel can be fed from a fuel tank (10), can be fluidly connected to a consumer (16),
a fuel consumption-measuring device (28) which is arranged in the fuel feed line (14),
a first fuel return line (26) which branches off at the consumer (16) and opens into the fuel feed line (14) between the fuel consumption-measuring device (28) and the consumer (16),
a second fuel return line (50) which branches off from the fuel feed line (14) between the first fuel pump (12) and the fuel consumption-measuring device (28) and opens into the fuel tank (10), and
a heat exchanger (52) via which the fuel from the second fuel return line (50) extracts heat from the fuel of the first fuel return line (26),
**characterized in that**
means (54, 56, 62) are arranged in the first fuel return line (26) and in the second fuel return line (50), by which equal volume flows are set at an opening (53) of the first fuel return line (26) into the fuel feed line (14), and at a branch (58) from the fuel feed line (14) into the second fuel return line (50).

2. Fuel consumption-measuring system of claim 1, **characterized in that** a flow meter (54, 56) is arranged respectively in the second fuel return line (50) and in the first fuel return line (26) as a means for creating equal volume flows from the fuel feed line (14) into the second fuel return line (50) and from the first fuel return line (26) into the fuel feed line (14), wherein both flow meters (54, 56) are electrically connected to a volume flow regulating unit (60).

3. Fuel consumption-measuring system of claim 2, **characterized in that** a regulating valve (62) is arranged in the second fuel return line (50) as a means for generating equal volume flows in the fuel return lines (26, 50), the valve being controllable via the volume flow regulating unit (60) which is connected to the flow meters 54, 56).

4. Fuel consumption-measuring system of one of claims 2 or 3, **characterized in that** a second fuel pump (64) is arranged in the first fuel return line (26).

5. Fuel consumption-measuring system of claim 4, **characterized in that** the second fuel pump (64) is electrically connected to a pressure regulating unit (68) which is electrically connected to a pressure pickup (66) arranged in the first fuel return line (26) upstream of the heat exchanger (52).

6. Fuel consumption-measuring system of claim 4, **characterized in that** the second fuel pump (64) is operated at a constant rotational speed is connected in a circuit with a regulating valve (70), wherein the regulating valve (70) and the first flow meter (54) are connected to the pressure regulating unit (68).

7. Fuel consumption-measuring system of claim 6, **characterized in that** the second fuel pump (64) is arranged upstream of the heat exchanger (52) and the regulating valve (70) is arranged in a circuit line (72) that branches from the fuel return line (26) downstream of the heat exchanger (52) and opens into the fuel return line (26) downstream of the flow meter (54) and upstream of the fuel pump (64).

8. Fuel consumption-measuring system of one of claims 1 to 5, **characterized in that** the first flow meter (54) and the second fuel pump (64) are arranged downstream of the heat exchanger (52) in the first fuel return line (26), and the second flow meter (56) and the regulating valve (62) are arranged upstream of the heat exchanger (52) in the second fuel return line (50).

9. Fuel consumption-measuring system of claim 6 or 7, **characterized in that** the second flow meter (56) is arranged downstream of the heat exchanger (52) in the second fuel return line (50).

10. Fuel consumption-measuring system of one of the preceding claims, **characterized in that** a rotational displacer (30) is formed in the fuel consumption-measuring device (28) and a measuring chamber (38) is formed in a bypass line (34) bypassing the rotational displacer (30), in which line a piston (40) is arranged, wherein the rotational displacer (30) is adapted to be driven as a function of the displacement of the piston (40).

11. Fuel consumption-measuring system of one of the preceding claims, **characterized in that** a bypass valve (46) is arranged in the first fuel return line (26), via which the fuel from the first fuel return line (26) may be guided selectively to the fuel feed line (14) or back to the tank (10).

12. Method for measuring the fuel consumption of an internal combustion engine with a fuel consumption-measuring system of one of the preceding claims, in which the fuel is fed from a tank (10) to a consumer (16) via a first fuel pump (12), wherein a fuel consumption-measuring device (28) measures the volume flow of the fuel fed,
**characterized in that**
while measuring the fuel consumption, the volume flow in a first fuel return line (26), via which fuel flows from the consumer (16) back to a fuel feed line (14) between the consumer (16) and the fuel consumption-measuring device (28), and in a second fuel return line (50), via which fuel is fed from the fuel feed line (14) back to the tank (10), is regulated to equal measuring values.

13. Method for measuring the fuel consumption of an internal combustion engine of claim 12, **characterized in that** the temperature of the fuel in the first fuel return line (26) is cooled down upstream of the opening into the fuel feed line (14) to a temperature near the temperature of the fuel in the tank (10), by making the heated fuel in the first fuel return line (26) and the not-heated fuel in the second fuel return line (50) serve as heat exchange media of a heat exchanger (52).

14. Method for measuring the fuel consumption of an internal combustion engine of one of claims 12 or 13, **characterized in that** the pressure of the fuel is thus measured in the first fuel return line (26) by a pressure pickup (66), and a second fuel pump (64) downstream of the heat exchanger (52) and upstream of the opening (53) of the first fuel return line (26) is regulated via a pressure regulating unit (68) such that a constant pressure prevails in the first fuel return line (26).

15. Method for measuring the fuel consumption of an internal combustion engine of one of claims 12 or 13, **characterized in that** the pressure of the fuel in the first fuel return line (26) is regulated via a regulating valve (70) arranged in a circuit line (72) together with a constant-speed second fuel pump (64) and via a pressure regulating unit (68) such that a constant pressure prevails in the region of the opening (53) of the first fuel return line (26).

16. Method for measuring the fuel consumption of an internal combustion engine of one of claims 12 to 15, **characterized in that** the volume flow of the fuel in the first fuel return line (26) is measured by a first flow meter (54) and the volume flow of the fuel in the second fuel return line (50) is measured by a second flow meter (56), and that a regulating valve (62) in the second fuel return line (50) is regulated by a volume flow regulating unit (60) such that the volume flow in the second fuel return line (26) is regulated to the same value as the volume flow in the first fuel return line (26).

17. Method for measuring the fuel consumption of an internal combustion engine of one of claims 12 to 16, **characterized in that** outside the measurement times, a fuel flow from the first fuel return line (26) is returned into the tank (10) via a bypass valve (46) while bypassing the heat exchanger (52), and that the regulating valve (62) closes the second fuel return line (26).

18. Method for measuring the fuel consumption of an internal combustion engine of claim 17, **characterized in that** during the measuring times, the pressure in the first fuel return line (26) is constantly regulated to a pressure prevailing outside the measuring times.

## Revendications

1. Système de mesure de la consommation de carburant d'un moteur à combustion interne, avec
une conduite d'alimentation en carburant (14) par laquelle une première pompe de circulation de carburant (12), par laquelle carburant peut être alimenté depuis un réservoir (10), peut être reliée fluidiquement avec un consommateur (16),
un dispositif de mesure de la consommation de carburant (28) disposé dans la conduite d'alimentation en carburant (14),
une première conduite de retour de carburant (26) branchée du consommateur (16) et débouchant dans la conduite d'alimentation en carburant (14) entre le dispositif de mesure de la consommation de carburant (28) et le consommateur (16),
une deuxième conduite de retour de carburant (50) branchée de la conduite d'alimentation en carburant (14) entre la première pompe de circulation de carburant (12) et le dispositif de mesure de la consommation de carburant (28) et débouche dans le réservoir (10),
un échangeur de chaleur (52) à travers lequel le carburant de la deuxième conduite de retour de carburant (50) extrait de la chaleur du carburant de la première conduite de retour de carburant (26),
**caractérisé en ce que**
des moyens (54, 56, 62) sont disposés dans la première conduite de retour de carburant (26) et la deuxième conduite de retour de carburant (50), par lesquels moyens un même débit volumique est ajusté à une bouche (53) de la première conduite de retour de carburant (26) dans la conduite d'alimentation en carburant (14) et à un branchement (58) partant de la conduite d'alimentation en carburant (14) dans la deuxième conduite de retour de carburant (50).

2. Système de mesure de la consommation de carburant selon la revendication 1, **caractérisé en ce que** l'on dispose, comme moyen pour générer des débits de volume égaux depuis la conduite d'alimentation en carburant (14) dans la deuxième conduite de retour de carburant (50) et depuis la première conduite de retour de carburant (26) dans la conduite d'alimentation en carburant (14), un débitmètre (54, 56) respectif dans la deuxième conduite de retour de carburant (50) et la première conduite de retour de carburant (26), les deux débitmètres (54, 56) étant reliés électriquement à une unité de réglage du débit volumique (60).

3. Système de mesure de la consommation de carburant selon la revendication 2, **caractérisé en ce qu'**une vanne de réglage (62) est disposée dans la deuxième conduite de retour de carburant (50) comme moyen pour générer des débits de volume égaux dans les conduites de retour de carburant (26, 50), ladite vanne pouvant être commandée par l'unité de réglage du débit volumique (60) reliée aux débitmètres (54, 56).

4. Système de mesure de la consommation de carburant selon l'une quelconque des revendications 2 ou 3, **caractérisé en ce qu'**une deuxième pompe de carburant (64) est disposée dans la première conduite de retour de carburant (26).

5. Système de mesure de la consommation de carburant selon la revendication 4, **caractérisé en ce que** la deuxième pompe de carburant (64) est électriquement reliée à une unité de réglage de pression (68), qui est électriquement reliée à un capteur de pression (66) disposé dans la première conduite de retour de carburant (26) en amont dudit échangeur de chaleur (52).

6. Système de mesure de la consommation de carburant selon la revendication 4, **caractérisé en ce que** la deuxième pompe de carburant (64) est opérée à une vitesse constante et connectée en circuit avec une vanne de réglage (70), ladite vanne de réglage (70) et le premier débitmètre (54) étant relié à ladite unité de réglage de pression (68).

7. Système de mesure de la consommation de carburant selon la revendication 6, **caractérisé en ce que** la deuxième pompe de carburant (64) est disposée en amont dudit échangeur de chaleur (52) et la vanne de réglage (70) est disposée dans une conduite circulaire (72) branchant de la conduite de retour de carburant (26) en aval du débitmètre (54) et débouche dans la conduite de retour de carburant (26) en amont de la pompe de carburant (64).

8. Système de mesure de la consommation de carburant selon l'une quelconque des revendications 1 à 5, caractérisé en ce le premier débitmètre (54) et la deuxième pompe de carburant (64) sont disposés dans la première conduite de retour de carburant (26) en aval dudit échangeur de chaleur (52), et le deuxième débitmètre (56) et la vanne de réglage (62) sont disposés dans la deuxième conduite de retour de carburant (50) en amont du dudit échangeur de chaleur (52).

9. Système de mesure de la consommation de carburant selon l'une quelconque des revendications 6 ou 7, **caractérisé en ce que** le deuxième débitmètre (56) est disposé dans la deuxième conduite de retour de carburant (50) en aval du dudit échangeur de chaleur (52).

10. Système de mesure de la consommation de carburant, selon l'une quelconque des revendications précédentes, **caractérisé en ce qu'**un élément déplaceur (30) rotatif est formé dans le dispositif de mesure de la consommation de carburant (28) et une chambre de mesure (38) est formée dans une conduite de dérivation (34) dudit élément déplaceur (30) rotatif, dans laquelle un piston (40) est disposé, ledit élément déplaceur (30) pouvant être entrainé en fonction de la déviation du piston (40).

11. Système de mesure de la consommation de carburant, selon l'une quelconque des revendications précédentes, **caractérisé en ce qu'**une vanne de dérivation (46) est disposée dans la première conduite de retour de carburant (26), par laquelle vanne le carburant peut être dirigé de la première conduite de retour de carburant (26) sélectivement vers la conduite d'alimentation en carburant (14) ou renvoyé vers le réservoir (10).

12. Procédé de mesure de la consommation de carburant d'un moteur à combustion interne avec un système de mesure de la consommation de carburant selon l'une quelconque des revendications précédentes, dans lequel du carburant est alimenté depuis un réservoir (10) vers un consommateur (16) par une première pompe de carburant (12), un dispositif de mesure de la consommation de carburant (28) mesurant le débit volumique du carburant alimenté,
**caractérisé en ce que**
pendant le mesure de la consommation de carburant, le débit volumique dans une première conduite de retour de carburant (26), par laquelle du carburant retourne du consommateur (16) vers une conduite d'alimentation en carburant (14) entre le consommateur (16) et le dispositif de mesure de la consommation de carburant (28), et dans une deuxième conduite de retour de carburant (50), par laquelle du carburant est renvoyé de la conduite d'alimentation en carburant (14) vers le réservoir (10), est réglé à des valeurs mesurées égales.

13. Procédé de mesure de la consommation de carburant d'un moteur à combustion interne selon la revendication 12, **caractérisé en ce que** la température du carburant dans la première conduite de retour de carburant (26) est refroidi, en amont de la bouche dans la une conduite d'alimentation en carburant (14), à approximativement la température du carburant dans le réservoir (10), par le fait que le carburant chauffé dans la première conduite de retour de carburant (26) et le carburant non-chauffé dans la deuxième conduite de retour de carburant (50) servent comme agent caloporteur d'un échangeur de chaleur (52).

14. Procédé de mesure de la consommation de carburant d'un moteur à combustion interne selon l'une quelconque des revendications 12 ou 13, **caractérisé en ce que** la pression du carburant dans la première conduite de retour de carburant (26) est mesurée par un capteur de pression (66), et qu'une deuxième pompe de carburant (64) en amont d'une bouche (53) de la première conduite de retour de carburant (26) est réglée par une unité de réglage de pression (68) de sorte qu'une pression constante règne dans la première conduite de retour de carburant (26).

15. Procédé de mesure de la consommation de carburant d'un moteur à combustion interne selon l'une quelconque des revendications 12 ou 13, **caractérisé en ce que** la pression du carburant dans la première conduite de retour de carburant (26) est réglée par une vanne de réglage (70), disposée dans une conduite circulaire (72) avec une deuxième pompe de carburant (64) à vitesse constante, de sorte qu'une pression constante règne dans la région de la bouche (53) de la première conduite de retour de carburant (26).

16. Procédé de mesure de la consommation de carburant d'un moteur à combustion interne selon l'une quelconque des revendications 12 à 15, **caractérisé en ce que** le débit volumique du carburant dans la première conduite de retour de carburant (26) est mesuré par un premier débitmètre (54) et le débit volumique du carburant dans la deuxième conduite de retour de carburant (50) est mesuré par un deuxième débitmètre (56), et qu'une vanne de réglage (62) dans la deuxième conduite de retour de carburant (50) est réglée par une unité de réglage du débit volumique (60), de sorte que le débit volumique dans la deuxième conduite de retour de carburant (50) est réglée à une valeur égale à celle du débit volumique dans la première conduite de retour de carburant (26).

17. Procédé de mesure de la consommation de carburant d'un moteur à combustion interne selon l'une quelconque des revendications 12 à 16, **caractérisé en ce que**, hors des temps de mesure, un débit de carburant est retourné par une vanne de dérivation (46) de la première conduite de retour de carburant (26) vers le réservoir (10) tout en contournant ledit échangeur de chaleur (52), et que la vanne de réglage (62) ferme la deuxième conduite de retour de carburant (50).

18. Procédé de mesure de la consommation de carburant d'un moteur à combustion interne selon la revendication 17, **caractérisé en ce que**, pendant les temps de mesure, la pression dans la première conduite de retour de carburant (26) est constamment réglée à une pression hors des temps de mesure.
